# EUROPÄISCHE PATENTANMELDUNG

(11) **EP 0 964 271 A2**
(43) Veröffentlichungstag der Anmeldung: **15.12.1999**
(21) Anmeldenummer: 99108389.0
(22) Anmeldetag: 29.04.1999
(51) Int. Cl.: G01V 1/38

(54) **Unterwasser-Schleppantenne**

(30) Priorität: 10.06.1998 DE 19825887
(71) Anmelder: STN ATLAS Elektronik GmbH, 28309 Bremen (DE)
(72) Erfinder: Busch, Rainer, 26131 Oldenburg (DE)

(57) **Zusammenfassung**

Eine Unterwasser-Schleppantenne weist einen Schleppstrang mit einem eine akustische Sektion aus einer Vielzahl von beabstandeten Hydrophonen enthaltenden Schlauch (20) und mit einem den Schlauch (20) ausfüllenden Auftriebsmittel (21) zum Einstellen der Schlepptiefe des Schleppstrangs (10), sowie eine Trimmvorrichtung zum Variieren Schlepptiefe des Schleppstrang (10) auf. Zur Vereinfachung der Trimmung des Schleppstrangs (10) mit veränderlicher Schlepptiefe umfaßt die Trimmvorrichtung eine Mehrzahl von an ausgesuchten Stellen im Schleppstrang (10) innerhalb des Schlauchs (20) angeordnete Hohlräume (26) und den Hohlräumen zugeordnete, elektrisch angetriebene Pumpelemente (27) zum Fluten und Lenzen der Hohlräume (26) mit Wasser aus der Schleppstrangumgebung auf. Bevorzugt sind die Hohlräume (26) in den Pumpelementen (27) integriert.

## Beschreibung

Die Erfindung betrifft eine Unterwasser-Schleppantenne der im Oberbegriff des Anspruchs 1 definierten Gattung.

Schleppantennen für Zwecke der Sonarortung werden üblicherweise ohne Trimmvorrichtung ausgeführt und vor dem Auslegen mit einem vorzugsweisen liquiden Auftriebsmittel gefüllt, das aufgrund seiner Füllmenge und seiner physikalischen Eigenschaften Auftriebsneutralität des Schleppstrangs in der gewünschten Auslege- oder Schlepptiefe der Schleppantenne herstellt. Ändert sich das Einsatzgebiet, z.B. beim Übergang von Nord- zur Ostsee, so ändern sich in der Regel auch die physikalischen Eigenschaften des Meereswassers, z.B. dessen Dichte, der Salzgehalt, die Temperatur etc. Um dann die gewünschte wassertiefe wieder zu erreichen, muß die Schleppantenne eingeholt und an Bord Auftriebsmittel zugeführt oder abgelassen werden oder das Auftriebsmittel durch ein anderes ersetzt werden. Eine solche Umrüstung der Schleppantenne ist eine aufwendige Prozedur und nimmt Stunden in Anspruch.

Um dies zu vermeiden, hat man bekannte Unterwasser-Schleppantennen mit einer Trimmvorrichtung ausgestattet, mit der das Auftriebsverhalten des Schleppstrangs in Grenzen beeinflußt werden kann, ohne die Schleppantenne zu Manipulationen am Auftriebsmittel einholen zu müssen. Bei einer bekannten Unterwasser-Schleppantenne der eingangs genannten Art (DE 37 391 184 C2) weist die Trimmvorrichtung zwei den Schleppstrang durchziehende Trimmschläuche auf, die an einem Ende miteinander verbunden sind und am anderen Ende an einem Zu- und Ablauf für ein flüssiges Auftriebsmittel, z.B. Öl, angeschlossen sind. Der Zu- und Ablauf für das Auftriebsmittel ist durch ein dem Schleppstrang mit dem Schleppfahrzeug verbindendes Zugkabel hindurch an Bord des Schleppfahrzeuges verlegt und wird von hier aus mit Auftriebsmittel beschickt. Damit läßt sich der akustisch wirksame Teil der Schleppantenne im Schleppstrang austrimmen, d.h. in einer gewünschten Schlepptiefe relativ zum Schleppfahrzeug weitgehend horizontal ausrichten, was für die Genauigkeit der akustischen Ortung von wesentlicher Bedeutung ist. Eine solche Trimmvorrichtung ist jedoch fertigungstechnisch sehr aufwendig und erschwert auch das Handling der Schleppantenne beim Ein- und Ausbringen von Bord des Schleppfahrzeuges aus.

Der Erfindung liegt die Aufgabe zugrunde, bei einer Unterwasser-Schleppantenne der eingangs genannten Art die Trimmung des Schleppstrangs zumindest in einem begrenzten Tiefenhubbereich der Schleppantenne wesentlich einfacher, schneller und wirksamer zu gestalten und die erforderliche Trimmvorrichtung kostengünstiger zu konzipieren.

Die Aufgabe ist bei einer Unterwasser-Schleppantenne der eingangs genannten Art durch die Merkmale im Patentanspruch 1 gelöst.

Die erfindungsgemäße Unterwasser-Schleppantenne hat den Vorteil, daß die Pumpelemente mit integriertem Hohlraum technisch robuste und recht kostengünstige Bauteile sind, so daß die Trimmvorrichtung zu niedrigen Gestehungskosten erhältlich ist. Die Baueinheiten sind innerhalb des Schleppstrang-Schlauches angeordnet und behindern damit nicht das Ein- und Ausbringen der Schleppantenne. Durch Fluten und Lenzen der Hohlräume kann nicht nur die Tauchtiefe variiert werden, sondern auch durch unterschiedliche Lenz- und Flutgrade der über den Schleppstrang verteilten Hohlräume eine exakte Ausrichtung des akustischen Sektors des Schleppstrangs in horizontaler Richtung erreicht werden, so daß die geforderte Genauigkeit der akustischen Ortung mühelos erreicht werden kann. Zusätzlich eröffnet sich mit den Pumpelementen und Hohlräumen die Möglichkeit, den akustischen Sektor auch unter einem spitzen Winkel schräg zur Schlepprichtung anzustellen, in dem die vorderen und hinteren Hohlräume stärker geflutet oder gelenzt werden und die dazwischenliegenden Hohlräume entsprechend angepaßt mit Wasser gefüllt werden. Mit einer solchen schräg gestellten akustischen Sektion mit fortlaufend variiertem Schrägungswinkel läßt sich zusätzlich die Tauchtiefe einer georteten akustischen Schallquelle vermessen, wodurch sich das Einsatzprofil der Unterwasser-Schleppantenne deutlich verbessert. Die erfindungsgemäße Trimmvorrichtung kann sowohl bei herkömmlichen Unterwasser-Schleppantennen, sog. Towed Arrays, mit einem elastischen Schlauch als auch bei sog. Digital Arrays mit einem steifen Schlauchkörper, aber auch aufgrund der Kleinheit der Pumpelemente, bei sog. Thinline Arrays mit einem Außendurchmesser von weniger als 3 cm eingesetzt werden.

Zweckmäßige Ausführungsformen der erfindungsgemäßen Unterwasser-Schleppantenne mit vorteilhaften Weiterbildungen und Ausgestaltungen der Erfindung ergeben sich aus den weiteren Ansprüchen.

Die Erfindung ist anhand eines in der Zeichnung dargestellten Ausführungsbeispiels im folgenden näher beschrieben. Es zeigen in jeweils schematischer Darstellung:
- Fig. 1: eine in einem Seegebiet von einem Schleppfahrzeug geschleppten Unterwasser-Schleppantenne in Seitenansicht,
- Fig. 2: ausschnittsweise eine vergrößterte Darstellung des Schleppstrangs der Schleppantenne in Fig. 1,
- Fig. 3: eine vergrößerte Darstellung des Ausschnitts III in Fig. 2 im Längsschnitt.

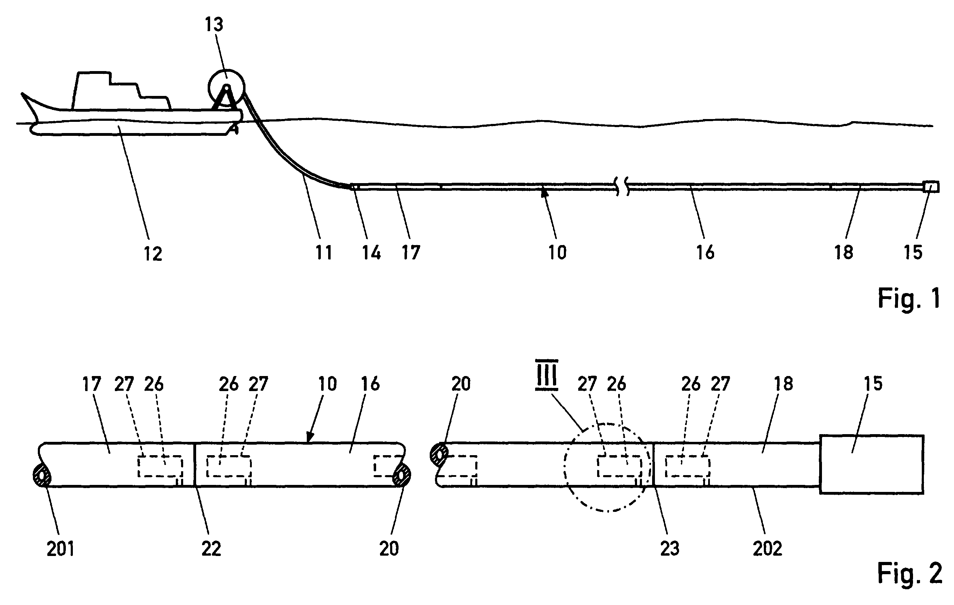

Die in Fig. 1 in schematischer Seitenansicht und in Fig. 2 im vergrößerten Ausschnitt zu sehende Unterwasser-Schleppantenne besteht aus einem Schleppstrang 10 und einem Schleppkabel 11, das den Schleppstrang 10 mit einem Schleppfahrzeug 12 verbindet. Das Schleppfahrzeug 12 ist hier als Überwasserschiff dargestellt, kann aber auch ein U-Boot sein. Das Schleppkabel 11 ist bordseitig an einer Aufwickeltrommel 13 befestigt, auf welche sowohl das Schleppkabel 11 als auch der Schleppstrang 10 aufgewickelt werden können.

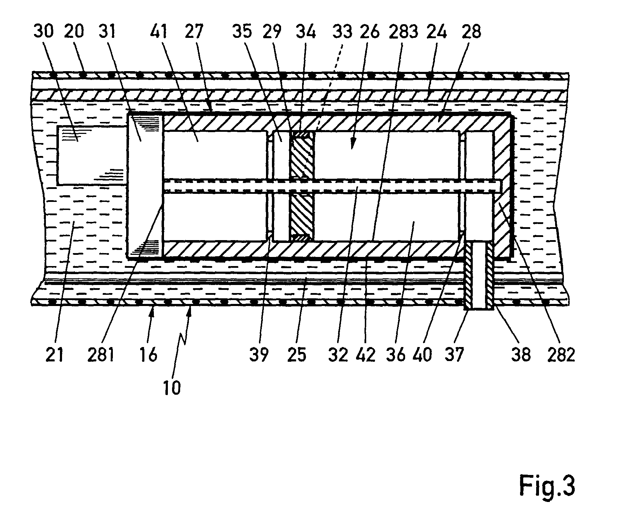

Der Schleppstrang 10 ist mittels eines Steckers 14, der sowohl eine mechanische als auch eine elektrische Verbindung herstellt, mit dem Schleppkabel 11 verbunden und trägt an seinem davon abgekehrten Ende eine Schleppbremse 15, die beim Schleppen für eine gewisse Zugspannung am Schleppstrang 10 entgegen Schlepprichtung sorgt. Der Schleppstrang 10 besitzt eine akustische Sektion 16, die zwischen zwei Dämpfungsmodulen 17, 18, sog. VIMs (Vibration Isolation Moduls), angeordnet ist. Der vordere Dämpfungsmodul 17 verbindet die akustische Sektion 16 mit dem Schleppkabel 11, während der hintere Dämpfungsmodul 18 die Schleppbremse 15 an die akustische Sektion 16 ankoppelt. Beide Dämpfungsmodule 17, 18 dienen zur akustischen Entkopplung der akustischen Sektion 16 gegenüber den Schlag- und Vibrationsgeräuschen des Schleppkabels 11 bzw. der Schleppbremse 15. Die akustische Sektion 16, die in bekannter Weise aus einer Vielzahl von hier nicht dargestellten, beabstandeten Hydrophonen besteht, ist in einem elastischen Schlauch 20 angeordnet, der mit einem Auftriebsmittel 21 (Fig. 3), z.B. Öl oder Gel, gefüllt ist. Auch die beiden Dämpfungsmodule 17, 18 werden von mit dem Auftriebsmittel 21 gefüllten Schlauchabschnitten gebildet, die an den Schnittstellen 22, 23 (Fig. 2) an den Schlauch 20 mit der akustischen Sektion 16 angekoppelt sind. Wie aus Fig. 3 zu erkennen ist, durchzieht einerseits ein Zugseil 24 und andererseits ein Kabelbaum 25 die gesamten Schlauch 20 und auch die Schlauchabschnitte 201, 202 der Dämpfungsmodule 17, 18. Das Zugseil 24 dient zur Aufnahme der am Schleppstrang 10 angreifenden Zugkraft und der Kabelbaum 25 zur Strom- und Datenübertragung zwischen den Hydrophonen und sonstigen elektronischen Bauteilen in Schleppstrang 10 zum Schleppfahrzeug 12. Das in der akustischen Sektion 16 und in den Dämpfungsmodulen 17, 18 enthaltene Auftriebsmittel 21 ist bezgl. seiner Füllmenge und physikalischen Eigenschaften so ausgelegt, daß der gesamte Schleppstrang 10 in einer gewünschten Wassertiefe Auftriebsneutralität aufweist.

Der Schleppstrang 10 ist mit einer Trimmvorrichtung ausgerüstet, die aus einer Mehrzahl von an ausgesuchten Stellen des Schleppstrangs 10 innerhalb des Schlauches 20 und der Schlauchabschnitte 201, 202 der Dämpfungsmodule 17, 18 angeordnete Hohlräume 26 und den Hohlräumen 26 zugeordnete, elektrisch angetriebene Pumpelemente 27 aufweist. Durch Fluten und Lenzen der über den Schleppstrang 10 verteilt angeordneten Hohlräume 26 mit Wasser aus der Schleppstrangumgebung kann sowohl die Tauchtiefe des Schleppstrangs 10 variiert werden, als auch der Schlauch 20 mit der akustischen Sektion 16 exakt horizontal und ohne Durchhängen ausgerichtet werden. Eine solche lineare Ausrichtung der Hydrophone der akustischen Sektion 16 verbessert wesentlich die Ortungsergebnisse der Schleppantenne.

In dem beschriebenen Ausführungsbeispiel sind die Hohlräume 26 in den Pumpelementen 27 integriert, wobei Fig. 3 im Längsschnitt ein Ausführungsbeispiel für ein solches Pumpelement 27 mit integriertem Hohlraum 26 zeigt. Das Pumpelement 27 weist einen Arbeitszylinder 28 mit einem darin axial verschieblich geführten Arbeitskolben 29 auf, der von einem Elektromotor 30 linear angetrieben wird. Der Elektromotor 30 ist außen an der einen Stirnseite 281 des Arbeitszylinders 28 angeflanscht und treibt über ein in einem Getriebegehäuse 31 aufgenommenes Getriebe eine Gewindespindel 32 an, die sich im Arbeitszylinder 28 axial erstreckt und an der anderen Stirnseite des Arbeitszylinders 28 in der Zylinderwand 282 drehbar gelagert ist. Auf der Gewindespindel 32 ist der Arbeitskolben 29 mit einem Innengewinde 33 verschraubt. Der durch eine umlaufende Ringdichtung 34 gegenüber der Zylinderinnenwand 283 gas- und flüssigkeitsdicht abgedichtete Arbeitskolben 29 unterteilt den Arbeitszylinder 28 in zwei Zylinderkammern 35, 36 mit bei der Kolbenverschiebung sich invers verändernden Kammervolumina, von denen die Zylinderkammer 35 mit einer Ausgleichskammer 41 und die andere Zylinderkammer 36 über einen Füllstutzen 37 mit der Schleppstrangumgebung, also mit dem Wasser, in Verbindung steht. Die Zylinderkammer 36 bildet den integrierten Hohlraum 26 der Trimmvorrichtung, und die Ausgleichskammer 41, die im Arbeitszylinder 28 integriert ist und mit der Zylinderkammer 35 ein hermetisch geschlossenes System bildet, ist mit Luft oder einem Öl gefüllt, dessen spezifisches Gewicht wesentlich kleiner als Wasser ist. Die Ausgleichskammer 41 ist durch einen Endanschlag 39 für den Arbeitskolben 29 begrenzt. Ist die Ausgleichskammer 41 mit Luft gefüllt, so kann ihr Kammervolumen, da Luft in Grenzen kompressibel ist, wesentlich kleiner, z.B. ein Drittel, gemacht werden als das Maximalvolumen der Zylinderkammer 36. Ist die Ausgleichskammer 41 mit Öl gefüllt, so muß ihr Kammervolumen dem Maximalvolumen der Zylinderkammer 36 entsprechen. Eine weitere Verkleinerung der Ausgleichskammer 41 kann durch Erzeugen eines Vakuums oder Unterdrucks in der Ausgleichskammer 41 erreicht werden. Der im Wasser frei mündende Füllstutzen 37 ist durch einen Wanddurchbruch 38 im Schlauch 20 hindurchgeführt. Bei Verwendung von Gel als Auftriebsmittel wird der Arbeitszylinder 28 von dem Gel in seiner Lage fixiert, so daß keine weiteren Halterungen für das Pumpelement 27 vorgesehen werden müssen. Ist der Schlauch 20 mit einem liquiden Auftriebsmittel, z.B. Öl, gefüllt, so muß das Pumpenelement 27, also der Arbeitszylinder 28, gegenüber dem Schlauch 20 abgestützt und am Zugseil 24 gegen axiale Verschiebung befestigt werden. Beim Einschalten des Elektromotors 30 in die eine oder andere Drehrichtung wird durch Drehen der Gewindespindel 32 der Arbeitskolben 29 linear in die eine oder andere Richtung bis zu einem den Schiebeweg begrenzenden Endanschlag 39 bzw. 40 verschoben.

Die beide Endanschläge 39, 40 sind im Ausführungsbeispiel als von der Zylinderinnenwand 283 radial vorspringende Ringstege ausgeführt. Zusätzlich ist der Elektromotor 30 mit einer Endabschaltung versehen, die den Elektromotor 30 selbsttätig abschaltet, sobald der Arbeitskolben 29 an einem seiner Endanschläge 39, 40 anstößt. Um Schallreflektionen an den luftgefilterten Räumen, wie Zylinderkammern 35, 36 und Ausgleichskammer 41, zu verhindern, ist der gesamte Arbeitszylinder 28 von einer Schicht 42 aus einem Absorbermaterial umhüllt.

Soll die Schlepptiefe des Schleppstrangs 10 verringert werden, werden von einer hier nicht dargestellten Steuerschaltung alle Elektromotoren 30 der Pumpelemente 27 so angesteuert, daß der Arbeitskolben 29 in Richtung zu seinem Endanschlag 40 verschoben wird. Dadurch wird das in dem Hohlraum 26 (36) befindliche Wasser ausgeschoben, und durch das sich vergrößernde Luftvolumen in der Kammer 35 nimmt der Auftrieb des Schleppstrangs zu. Der Schleppstrang 10 steigt so weit an, bis wieder Auftriebsneutralität herrscht. Soll der Schleppstrang 10 wieder zu größerer Wassertiefe abgesenkt werden, so werden alle Pumpelemente 27 in umgekehrer Richtung angesteuert und der Arbeitskolben 29 verschiebt sich in Richtung zu seinem Anschlag 39. Dadurch vergrößert sich das Volumen der Kammer 36, und durch das über den Füllstutzen 37 nachströmende Wasser wird der Hohlraum 26 geflutet. Der dem Schleppstrang 10 eigene Auftrieb verringert sich, und der Schleppstrang sinkt in größere Wassertiefe.

Um den Schleppstrang 10 stets in einer bestimmten Wassertiefe selbsttätig zu halten, kann - wie hier nicht weiter dargestellt ist - am Schleppstrang 10 ein Drucksensor angeordnet werden, der den Istdruckwert erfaßt und an die Steuerschaltung liefert. Die Steuerschaltung ist nun so ausgelegt, daß sie die Pumpelemente 27 so lange ansteuert, bis durch gleichmäßiges Lenzen oder Fluten aller Hohlräume 26 in den Pumpelementen 27 der vom Drucksensor gemessene Istdruckwert dem vorgegebenen Solldruckwert entspricht.

Die Trimmeinrichtung kann auch dazu benutzt werden, bei der Ortung von im Wasser befindlichen Schallquellen zusätzliche Informationen, so eine Information über die exakte Tiefe der Schallquelle, zu erlangen. hierzu werden von der Steuerschaltung die einzelnen über den Schleppstrang 10 verteilten Pumpelemente 27 so angesteuert, daß z.B. die Hohlräume 26 vom Stranganfang zum Strangende hin mit stetig anwachsendem Wasservolumen gefüllt werden. Dadurch besitzt der Schleppstrang 10 einen vom Stranganfang zum Strangende abnehmenden Auftrieb und die akustische Sektion 16 nimmt eine Schrägstellung ein, die unter einem spitzen Winkel zur Schlepprichtung liegt. Bei fortlaufend durchgeführter Änderung des Neigungswinkels der akustischen Sektion 16 im Bereich größer 0° und kleiner 90° gegenüber der Vertikalen kann mittels der über die einzelnen Hydrophone empfangenen akustischen Signale anhand der Intensität der Empfangssignale und des momentanen Anstellwinkels der akustischen Sektion 16 die Tiefe der georteten Schallquelle bestimmt werden. Alternativ kann die akustische Sektion unter einem konstanten Neigungswinkel angestellt und mittels des sog. Beamformings die Empfangskeule der akustischen Sektion, also die Empfangsrichtung mit der größten Empfindlichkeit geschwenkt werden. Anhand der Intensität der Empfangssignale, der Empfangsrichtung und des bekannten Anstell- oder Neigungswinkels der akustischen Sektion ist wiederum die Tiefe einer Schallquelle bestimmbar.

## Patentansprüche

1. Unterwasser-Schleppantenne mit einem Schleppstrang (10), der einen eine akustische Sektion (16) aus einer Vielzahl von beabstandeten Hydrophonen enthaltenden Schlauch (20) und ein dem Schlauch (20) ausfüllendes Auftriebsmittel (21) zum Einstellen der Schlepptiefe des Schleppstrangs (10) aufweist, und mit einer Trimmvorrichtung zum Variieren der Schlepptiefe des Schleppstrangs (10), dadurch gekennzeichnet, daß die Trimmvorrichtung eine Mehrzahl von an ausgesuchten Stellen im Schleppstrang (10) innerhalb des Schlauchs (20) angeordneten Hohlräumen (26) und den Hohlräumen (26) zugeordnete, elektrisch angetriebene Pumpelemente (27) zum Fluten und Lenzen der Hohlräume (26) mit Wasser aus der Schleppstrangumgebung aufweist.

2. Schleppantenne nach Anspruch 1, dadurch gekennzeichnet, daß die Hohlräume (26) in den Pumpenelementen (27) integriert sind.

3. Schleppantenne nach Anspruch 2, dadurch gekennzeichnet, daß jedes Pumpelement (27) einen Arbeitszylinder (28) und einen darin axial verschieblich geführten, elektrisch angetriebenen Arbeitskolben (29) aufweist, der den Arbeitszylinder (28) in zwei Zylinderkammern (35, 36) mit bei der Kolbenverschiebung sich invers verändernden Kammervolumina unterteilt, von denen die eine Kammer (35) mit einer Ausgleichskammer (41) und die den Hohlraum (26) bildende andere Kammer (36) mit der Schleppstrangumgebung in Verbindung steht.

4. Schleppantenne nach Anspruch 3, dadurch gekennzeichnet, daß die den Hohlraum (26) bildenden Kammer (36) an einem durch einen Wanddurchbruch (38) im Schlauch (20) dichtend hindurchgeführten, frei mündenden Füllstutzen (37) angeschlossen ist.

5. Schleppantenne nach Anspruch 3 oder 4, dadurch gekennzeichnet, daß die Pumpelemente (27) eine Endabschaltung aufweisen, die den elektrischen Antrieb in den Endlagen der Verschiebebewegung des Arbeitskolben (29) abschaltet.

6. Schleppantenne nach einem der Ansprüche 1 bis 5, dadurch gekennzeichnet, daß eine Steuerschaltung für die Pumpelemente (27) so ausgelegt ist, daß sie bei Kappen eines den Schleppstrang ziehenden Schleppkabels (11) ein Lenzen aller Hohlräume (26) auslöst.

7. Schleppantenne nach einem der Ansprüche 1 bis 6, dadurch gekennzeichnet, daß am Schleppstrang (10) ein Drucksensor angeordnet ist und daß eine eingangs mit dem Drucksensor verbundene Steuerschaltung die Pumpelemente (27) so lange ansteuert, bis der durch gleichmäßiges Lenzen oder Fluten aller Hohlräume (26) vom Drucksensor gemessene Istdruckwert einem vorgegebenen Solldruckwert entspricht.

8. Schleppantenne nach einem der Ansprüche 1 bis 7, dadurch gekennzeichnet, daß eine Steuerschaltung für die Pumpelemente (27) so ausgelegt ist, daß sie zwecks vertikaler Schrägstellung des Schleppstrangs (10) zur Schlepprichtung die Pumpelemente (27) so ansteuert, daß die Hohlräume (26) vom Stranganfang zum Strangende hin oder umgekehrt mit stetig anwachsendem Wasservolumen gefüllt werden.
